# EUROPÄISCHE PATENTANMELDUNG

(11) **EP 2 157 425 A1**
(43) Veröffentlichungstag der Anmeldung: **24.02.2010**
(21) Anmeldenummer: 09075350.0
(22) Anmeldetag: 07.08.2009
(51) Int. Cl.: G01N 29/04, G01N 29/44, G01N 29/48

(54) **Verfahren zur zerstörungsfreien Prüfung von metallischen Werkstücken auf Fehler mittels Ultraschall**

(30) Priorität: 22.08.2008 DE 102008039818
(71) Anmelder: Salzgitter Mannesmann Präzisrohr GmbH, 59067 Hamm (DE)
(72) Erfinder: Herrmann, Siegfried, 57076 Siegen (DE); Weingarten, Willi, 47447 Moers (DE)
(74) Vertreter: Meissner, Peter E.

(57) **Zusammenfassung**

Die Erfindung betrifft ein Verfahren zur zerstörungsfreien Prüfung von metallischen Werkstücken, insbesondere von Rohren oder Blechen, auf Fehler mittels Ultraschall, die mit einer vorgegebenen Testfehlerlänge und Prüfempfindlichkeit im Rahmen einer Standardprüfung geprüft werden, wobei das Werkstück mit mindestens einem Ultraschallprüfkopf abgetastet wird und insbesondere die von den sich im Werkstück befindenden Ungänzen reflektierten Ultraschallsignale von einem gleichen oder anderen Ultraschallprüfkopf erfasst und in auswertbare elektrische Signale umgewandelt und einer Schwellwertbetrachtung unterzogen werden, wobei auch Fehler detektiert und ausgewertet werden, die zeilen- oder clusterförmig nur über eine begrenzte Fläche des Werkstücks verteilt sind und deren einzelne Fehlerlänge unterhalb der Testfehlerlänge und deren Signalamplituden im Mittel unterhalb der vorgegeben Normalempfindlichkeitsschwelle liegen.

Erfindungsgemäß werden die Signalamplituden der im Mittel unterhalb der Normalempfindlichkeitsschwelle liegenden Anzeigen unabhängig von der Standardauswertung einer separaten Auswertung zugeführt, wobei die Auswertung nacheinander in folgenden Schritten vorgenommen wird:
- Maximalwertbildung der Einzelsignale über ein geeignetes vordefiniertes Flächensegment,
- gleitende Mittlung der Maximalwerte über eine der aufzufindenden Fehlergröße angepassten Flächeneinheit,
- Schwellwertfestlegung und -auswertung.

## Beschreibung

Die Erfindung betrifft ein Verfahren zur zerstörungsfreien Prüfung von metallischen Werkstücken auf Fehler mittels Ultraschall gemäß dem Oberbegriff des Patentanspruchs.

Unter Werkstücken werden in diesem Zusammenhang z. B. nahtlose oder geschweißte Rohre oder Bleche verstanden.

Zerstörungsfreie Verfahren zur Prüfung von metallischen Rohren auf Oberflächenfehler, wie z. B. die Ultraschallprüfung, sind seit langem bekannt und bewährt (DE 1 773 531, DE 27 51 810 A1 oder DE 40 27 161 A1).

Die Ultraschallprüfung wird angewandt um produktionsbegleitend insbesondere die Einhaltung geforderter Wanddicken von Rohren zu überprüfen und eventuell vorhandene Ungänzen in der Rohrwand, wie z. B. Dopplungen, Risse, Kerben, Einwalzungen oder sonstige Oberflächenfehler zu detektieren.

Bei der Prüfung werden nach dem Puls-Echoverfahren ausgehend von der Rohraußenoberfläche Ultraschallimpulse in der Wand angeregt und die von der Rohrinnenoberfläche oder einer Fehlerstelle reflektierten Signale wieder empfangen. Aus der Laufzeit des Signals und aus der Schallgeschwindigkeit im zu prüfenden Material lässt sich die Dicke der Rohrwand bzw. Fehlertiefe berechnen. Üblicherweise wird dieses Verfahren produktionsbegleitend und automatisiert sowohl bei magnetisierbaren, wie auch bei nicht magnetisierbaren Rohrwerkstoffen eingesetzt.

Bei der Vollkörperprüfung mittels Ultraschall findet in der Regel entsprechend den Anforderungen des Kunden eine bis zu 100%ige Prüfung des Prüflingsvolumens auf Längs-, Quer-, Schräg- und/oder Dopplungsfehler statt.

Zur Erfassung von parallel zur Rohrachse verlaufenden Fehlern (Längsfehler) bilden zwei oder mehr zueinander und zur Rohrachse senkrecht einschallende Prüfköpfe eine Prüfebene.

Die Prüfung auf senkrecht zur Rohrachse in Rohrumfangsrichtung verlaufende Fehler (Querfehler) erfolgt im Regelfall durch ein weiteres Prüfkopfpaar, das jedoch längs zur Rohrachse in das Rohr einschallt.

Zur Prüfung werden die Prüflinge unter Wasserankopplung (bei Piezo-Kristallen) oder berührungslos durch elektromagnetische Ultraschallanregung (EMUS) an den Prüfköpfen vorbeigeführt. Dabei können entweder die Prüfköpfe um das Rohr rotieren oder das Rohr rotiert so, dass sich mit dem Längsvorschub des Rohres eine schraubenlinienförmige Abtastung des Rohrumfanges ergibt.

Bei der Prüfung von Blechen auf Fehler werden die Prüfköpfe ebenfalls unter Wasserankopplung oder berührungslos, beispielsweise mäanderförmig, oder in Form eines Prüflineals geradlinig über die Blechoberfläche verfahren.

Für die Auswertung der reflektierten Ultraschallsignale werden diese in elektrische Signale umgewandelt und über Zeitfenster und Blenden ausgewählt, verstärkt und bewertet. Die Bewertungen beziehen sich auf Amplituden der Signale und die Laufzeiten zwischen den Signalen.

Die Prüfinformation, d. h. die Amplituden, Grenzwertüberschreitungen, Laufzeiten usw. werden mittels einer elektronischen Datenverarbeitungseinrichtung erfasst, ausgewertet, protokolliert und auf einem Monitor angezeigt.

Entsprechend den von den Kunden vorgeschriebenen Prüfnormen findet hierbei die Anlagenkalibrierung zum Nachweis der Anlagenempfindlichkeit durch Einstellen von Testnuten/Testbohrungen statt. Diese Testfehler sind in der Regel 20-25 mm lang, wobei die Prüfköpfe in ihren geometrischen Abmessungen zum Nachweis dieser Fehler optimiert werden.

Problematisch ist es, wenn die Prüflinge Ungänzen aufweisen, die nur sporadisch in kurzen Abständen, geringer Länge und nur über begrenzte Rohr- oder Blechabschnitte verteilt auftreten. Bei der Weiterverarbeitung, z. B. durch Kaltziehen der Rohre oder Walzen der Bleche, können diese Ungänzen dann quer zu ihrer Längserstreckung gestreckt werden, dabei kann es zu Aufbrüchen oder Rissen kommen. Derartige fehlerhafte Werkstücke werden bei der "Normalprüfung" als "Gut" bewertet; wegen möglicher Ausfallgefahr beim Kunden müssen sie aber frühzeitig erkannt und aussortiert werden, um Reklamationen zu vermeiden.

Eine derartige Anordnung bzw. Anhäufung von vielen kleinen Einzelfehlern, die sich über eine begrenzten Länge bzw. Fläche des zu prüfenden Werkstücks erstrecken, werden im Folgenden "Fehlerzeile" bzw. "Fehlercluster" genannt.

Bei betrieblichen Prüfungen kaltgezogener Rohre hat sich gezeigt, dass bei Querfehlern, die deutlich kürzer sind als die Testfehler, z. B. 3 bis 6 mm, bei Normaleinstellung der Empfindlichkeit, diese verfahrensbedingt wegen der schraubenlinienförmigen Abtastung mit einem Prüfkopf nicht sicher identifiziert werden können. Detektiert wurden Fehler, die in einem Abstand von 3 bis 6 mm auf einem Längenabschnitt von 1 bis 6 m des Rohres in Form einer Fehlerzeile angeordnet waren.

Verfahrensbedingt werden einerseits durch die schraubenlinienförmige Abtastung in Spuren nicht alle Fehler detektiert, anderseits liegen die Signalamplituden wegen der schlechten Reflektionseigenschaften kleiner Fehler zum Teil unterhalb der eingestellten Empfindlichkeitsschwelle.

Dieses grundsätzliche Problem besteht gleichermaßen für die Detektion solcher Fehler in Blechen und auch bei mehr clusterförmig in einem begrenzten Flächenbereich von Rohren oder Blechen auftretenden Fehlern.

Eine mögliche Lösung besteht zwar darin, die Prüfempfindlichkeit soweit zu erhöhen, dass auch diese Fehler eindeutig erkannt werden, dies hat jedoch den Nachteil, dass auch tolerable Signale, wie Einzelreflexionen und Störanzeigen, als Fehler angezeigt werden, die sonst unterhalb der Fehlerschwelle liegen. Dadurch wird der Ausschuss unverhältnismäßig erhöht mit der Folge erheblicher Kostensteigerungen.

Eine weitere Möglichkeit besteht darin, die Anzahl der Prüfkopfe für die Fehlerprüfung zu erhöhen, um eine größere Anzeigendichte bei den Empfangssignalen zu erhalten. Neben dem Nachteil sehr hoher Kosten für die zusätzlichen Prüfkanäle bleibt das Problem bestehen, dass bei Normaleinstellung der Empfindlichkeit die Fehleramplituden immer noch zu gering sind und damit nicht erkannt werden.

Aufgabe der Erfindung ist es, ein sicheres und kostengünstiges Verfahren zur zerstörungsfreien Prüfung von metallischen Werkstücken mittels Ultraschall anzugeben, mit dem auch Fehler eindeutig detektiert und ausgewertet werden können, die bei der Prüfung mit Normaleinstellung der Prüfempfindlichkeit normalerweise nicht erkannt werden.

Erfindungsgemäß wird diese Aufgabe dadurch gelöst, dass die Signalamplituden der im Mittel unterhalb der Empfindlichkeitsschwelle liegenden Anzeigen unabhängig von der Standardauswertung einer separaten Auswertung zugeführt werden, wobei die Auswertung nacheinander in folgenden Schritten vorgenommen wird:
- Maximalwertbildung der Einzelsignale über ein geeignetes vordefiniertes Flächensegment,
- gleitende Mittlung der Maximalwerte über eine der aufzufindenden Fehlergröße angepassten Flächeneinheit,
- Schwellwertfestlegung

Ein großer Vorteil des erfindungsgemäßen Verfahrens besteht darin, dass unter Vermeidung der Nachteile bekannter Lösungen allein durch eine sehr kostengünstig realisierbare intelligente separate Signalauswertung bei gleichzeitig geringem Hardwareaufwand nun auch unterhalb der "Normalfehlerschwelle" liegende Fehler sicher erfasst und ausgewertet werden können. Hierdurch werden einerseits fehlerhafte Werkstücke sicher erkannt und frühzeitig aussortiert und andererseits die Wirtschaftlichkeit durch Reduktion von Schein- und Fehlanzeigen erhöht.

Mit dem erfindungsgemäßen Verfahren ist es möglich, klassische bei der Standardprüfung auftretende Fehler von relevanten aber unterhalb der Empfindlichkeitsschwelle liegenden Fehlern zu trennen und unterschiedlichen Verarbeitungsschritten zuzuführen und daraus Einzelentscheidungen abzuleiten.

Bei der Schwellwertbetrachtung werden dann die ansonsten nicht ausgewerteten Fehlersignale im Regelfall einer Gut/Schlecht Entscheidung unterworfen.

Für die Anwendung des erfindungsgemäßen Verfahrens bei der Ultraschallprüfung von Rohren findet die Auswertung in mehreren Schritten statt. Zunächst wird zur Auswertung ein Rohrsegment festgelegt, welches von der Längserstreckung größer ist, als es dem Abtastvorschub bei der Ultraschallprüfung entspricht, wodurch sichergestellt wird, dass aufgetretene Fehlersignale sicher erfasst werden. In diesem Segment werden dann die maximalen Amplituden der reflektierten Signale ermittelt bzw. aller in dem Intervall vorkommenden Einzelprüfschüsse. Damit wird sichergestellt, dass eine nur kurz während der Abtastung erkannte Fehlerzeile in der Auswertung berücksichtigt wird.

Die so gewonnenen Maximalwerte werden gleitend über eine vorher wählbare Auswertelänge des Rohres gemittelt. Die Mittlungslänge wird in der Größenordnung der zu erwartenden Mindestlänge der Fehlerzeile bestimmt. Die gleitende Mittlung führt dazu, dass Signale von kürzeren Fehlern systematisch unterdrückt werden.

Die entstehende gemittelte Kurve wird einer Schwellenbewertung unterzogen und führt so zu einer sicheren Erkennung der Fehlerzeilen.

## Patentansprüche

1. Verfahren zur zerstörungsfreien Prüfung von metallischen Werkstücken, insbesondere von Rohren oder Blechen, auf Fehler mittels Ultraschall, die mit einer vorgegebenen Testfehlerlänge und Prüfempfindlichkeit im Rahmen einer Standardprüfung geprüft werden, wobei das Werkstück mit mindestens einem Ultraschallprüfkopf abgetastet wird und insbesondere die von den sich im Werkstück befindenden Ungänzen reflektierten Ultraschallsignale von einem gleichen oder anderen Ultraschallprüfkopf erfasst und in auswertbare elektrische Signale umgewandelt und einer Schwellwertbetrachtung unterzogen werden, wobei auch Fehler detektiert und ausgewertet werden, die zeilen- oder clusterförmig nur über eine begrenzte Fläche des Werkstücks verteilt sind und deren einzelne Fehlerlänge unterhalb der Testfehlerlänge und deren Signalamplituden im Mittel unterhalb der vorgegeben Normalempfindlichkeitsschwelle liegen
**dadurch gekennzeichnet,**
**dass** die Signalamplituden der im Mittel unterhalb der Normalempfindlichkeitsschwelle liegenden Anzeigen unabhängig von der Standardauswertung einer separaten Auswertung zugeführt werden, wobei die Auswertung nacheinander in folgenden Schritten vorgenommen wird:
- Maximalwertbildung der Einzelsignale über ein geeignetes vordefiniertes Flächensegment,
- gleitende Mittlung der Maximalwerte über eine der aufzufindenden Fehlergröße angepassten Flächeneinheit,
- Schwellwertfestlegung und -auswertung.
